(19) Europäisches Patentamt
European Patent Office
Office européen des brevets

(11) **EP 2 266 066 B1**

(12) **EUROPÄISCHE PATENTSCHRIFT**

(45) Veröffentlichungstag und Bekanntmachung des Hinweises auf die Patenterteilung:
**21.12.2011 Patentblatt 2011/51**

(21) Anmeldenummer: **08749120.5**

(22) Anmeldetag: **24.04.2008**

(51) Int Cl.:
*G06F 17/50* *(2006.01)*    *G06F 17/00* *(2006.01)*
*G06F 5/00* *(2006.01)*

(86) Internationale Anmeldenummer:
**PCT/EP2008/003334**

(87) Internationale Veröffentlichungsnummer:
**WO 2009/129824 (29.10.2009 Gazette 2009/44)**

(54) **VERFAHREN UND SYSTEM ZUR ERKENNUNG VON GRUPPIERUNGSEIGENSCHAFTEN**

METHOD AND SYSTEM FOR IDENTIFICATION OF GROUPING CHARACTERISTICS

PROCÉDÉ ET SYSTÈME DE DÉTECTION DE PROPRIÉTÉS DE GROUPEMENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**29.12.2010 Patentblatt 2010/52**

(73) Patentinhaber: **Siemens Aktiengesellschaft 80333 München (DE)**

(72) Erfinder: **STOLPER, Thilo 90402 Nürnberg (DE)**

(56) Entgegenhaltungen:
**EP-A- 0 314 595    US-A1- 2004 017 385
US-B1- 6 985 835**

**Beschreibung**

Die Erfindung betrifft ein Verfahren und ein Engineeringsystem, mit denen Beziehungen zwischen CAD-Objekten verschiedener CAD-Modelle automatisch erkannt werden können. Die Erfindung kommt insbesondere bei interaktiven Planungs- und Engineeringprozessen zum Einsatz, bei denen CAD-Modelle auf unterschiedlichen Abstraktionsebenen entstehen. So ist im Bereich der digitalen Produkt- und Fabrikplanung der Einsatz von CAD, CAE oder CAM Programmen weit verbreitet. Bei der Planung, Fertigung bis hin zu eventuell anfallenden Instandhaltungsaufgaben wird versucht, den Lebenszyklus eines Produktes über seinen kompletten Lebenszyklus datentechnisch zu begleiten. Hierbei wird ein ganzheitlicher Ansatz angestrebt, bei dem von der Planung, Realisierung, Steuerung und den laufenden Verbesserungen aller wesentlichen Fabrikprozesse und Ressourcen in Verbindung mit dem Produkt eine möglichst einheitliche Datenhaltung angestrebt wird.

Entsprechend werden viele CAD-Modelle während des oben beschriebenen Planungsprozesses für einzelne spezielle Domänen wie Fabrikplanung, Montageanleitungen, Simulationen etc. erstellt. Die CAD-Modelle werden hierbei auf ihren jeweiligen Verwendungszweck hin optimiert. Die hierfür eingesetzten Anwendungen benötigen häufig auch Daten anderer Anwendungen, die mit CAD-Modellen arbeiten. Um dies zu ermöglichen, ist es wünschenswert, Daten aus den unterschiedlichen Quellsystemen, die bei einem Planungsprozess zum Einsatz kommen, zentral zusammenzuführen und synchron zu halten. Zu diesem Zweck werden den einzelnen Quellsystemen übergeordnete Engineeringsysteme eingesetzt. Innerhalb dieser Engineeringsysteme hat der Benutzer die Möglichkeit, eine so genannte Ressourcenstruktur aufzubauen. Diese Ressourcenstruktur besteht aus Ressourcenbezeichnern, die den jeweiligen CAD-Objekten zugeordnet sind, und über die der Benutzer auf diese CAD-Objekte zugreifen kann. Wird nun beispielsweise ein und dieselbe physikalische Komponente von zwei unterschiedlichen CAD-Objekten modelliert, die unter Umständen aus unterschiedlichen CAD-Systemen stammen, so kann der Benutzer beiden CAD-Objekten einen gemeinsamen Ressourcenbezeichner zuordnen. Auf diese Art und Weise werden beide CAD-Objekte im Engineering System zusammengeführt, wodurch eine Synchronisation der den CAD-Objekten zu Grunde liegenden Daten ermöglicht wird.

Wird ein industrielles Automatisierungssystem mit Werkzeugen der digitalen Fabrik geplant, so entstehenden von den eingesetzten physikalischen Komponenten CAD-Modelle unterschiedlichen Abstraktionsgrads. In einer sehr frühen Planungsphase werden umfangreiche Systeme häufig durch ein noch relativ grob geartetes CAD-Objekt repräsentiert. Im Laufe der fortschreitenden Planungsphase wird dieses CAD-Objekts dann häufig genauer spezifiziert, indem einzelne Komponenten des modellierten Systems jeweils durch eigene detailreichere CAD-Objekte nachgebildet werden. Dies wird in vielen Fällen mit einem anderen CAD-Werkzeug geschehen, als das, welches in der frühen Projektphase eingesetzt wurde. Im Zuge einer solchen Planungsvorganges entstehen folglich neue CAD-Objekte, die mit dem anfangs generierten gröberen CAD-Objekt in einer Art Gruppenbeziehung stehen, die durch den räumlichen Zusammenhang der modellierten Komponenten begründet ist. Der Anwender, der eine solche Gruppenbeziehung erkennt, hat nun die Möglichkeit, auch ein solches Wissen einem Engineeringsystem zugänglich zu machen. So kann der Anwender beispielsweise innerhalb des Engineeringsystems eine Ressource für das zu modellierende System anlegen und einige dieser untergeordnete Subressourcen definieren, die den jeweiligen durch CAD-Objekte modellierten Komponenten des Automatisierungssystems zugeordnet sind.

Der Erfindung liegt nun die Aufgabe zu Grunde, eine einheitliche Datenhaltung und Datensynchronisation in einem verschiedenen CAD-Systemen übergeordneten Engineeringsystem auf einfache Art und Weise zu ermöglichen.

Diese Aufgabe wird durch ein Verfahren gelöst zur computergestützten, automatisierten hierarchischen Zuordnung von CAD-Objekten eines ersten CAD-Modells einer automatisierungstechnischen Anlage zu CAD-Gruppenobjekten eines zweiten CAD-Modells der automatisierungstechnischen Anlage mit Hilfe eines Engineeringsystems, welches zur hierarchisch strukturierten Datenverwaltung der CAD-Objekte und CAD-Gruppenobjekte eingerichtet ist, wobei zur Durchführung des Verfahrens eine Transformationsvorschrift verwendet wird, die Punkte einer innerhalb des ersten CAD-Modells modellierten Komponente der automatisierungstechnischen Anlage auf Punkte derselben Komponente des zweiten CAD-Modells abbildet, wobei das Verfahren folgende Verfahrenschritte aufweist:

- Anwendung der Transformationsvorschrift auf mindestens einen ersten Punktes einer ersten Hüllgeometrie eines eine erste Automatisierungskomponente darstellenden ersten CAD-Objektes des ersten CAD-Modells zur Berechnung eines zweiten Punktes im zweiten CAD-Modell und auf mindestens einen dritten Punkt einer zweiten Hüllgeometrie eines eine zweite Automatisierungskomponente darstellenden zweiten CAD-Objektes des ersten CAD-Modells zur Berechnung eines vierten Punktes im zweiten CAD-Modell,

- Überprüfung der Existenz einer Gruppierungsbeziehung, die als erfüllt gilt, wenn der zweite und der vierte Punkt innerhalb einer dritten Hüllgeometrie eines CAD-Gruppenobjektes des zweiten CAD-Modells angeordnet sind, und ,falls diese Gruppenbeziehung existiert,

- Erzeugung einer hierarchischen Ordnung innerhalb des Engineeringsystems, bei der das erste und zweite CAD-Objekt dem CAD-Gruppenobjekt hierarchisch untergeordnet sind.

Ferner wird die Aufgabe durch ein Engineeringsystem gelöst zur computergestützten, automatisierten hierarchischen Zuordnung von CAD-Objekten eines ersten CAD-Modells einer automatisierungstechnischen Anlage zu CAD-Gruppenobjekten eines zweiten CAD-Modells der automatisierungstechnischen Anlage, wobei das Engineeringsystem zur hierarchisch strukturierten Datenverwaltung der CAD-Objekte und CAD-Gruppenobjekte eingerichtet ist, und wobei das Engineeringsystem zur Anwendung einer Transformationsvorschrift eingerichtet ist, die Punkte einer innerhalb des ersten CAD-Modells modellierten Komponente der automatisierungstechnischen Anlage auf Punkte derselben Komponente des zweiten CAD-Modells abbildet, wobei das Engineeringsystem

- Mittel zur Anwendung der Transformationsvorschrift auf mindestens einen ersten Punkt einer ersten Hüllgeometrie eines eine erste Automatisierungskomponente darstellenden ersten CAD-Objektes des ersten CAD-Modells zur Berechnung eines zweiten Punktes im zweiten CAD-Modell und auf mindestens einen dritten Punkt einer zweiten Hüllgeometrie eines eine zweite Automatisierungskomponente darstellenden zweiten CAD-Objektes des ersten CAD-Modells zur Berechnung eines vierten Punktes im zweiten CAD-Modell,
- Mittel zur Überprüfung der Existenz einer Gruppierungsbeziehung, die als erfüllt gilt, wenn der zweite und der vierte Punkt innerhalb einer dritten Hüllgeometrie eines CAD-Gruppenobjektes des zweiten CAD-Modells angeordnet sind, und
- Mittel zur Erzeugung einer hierarchischen Ordnung innerhalb des Engineeringsystems, bei der das erste und zweite CAD-Objekt dem CAD-Gruppenobjekt hierarchisch untergeordnet sind,

aufweist.

Vorteilhafter Ausgestaltungsformen der Erfindung ergeben sich aus den abhängigen Patentansprüchen.

Vorraussetzung zur Durchführung des erfindungsgemäßen Verfahrens ist die Kenntnis der Transformationsvorschrift, mit der Punkte eines CAD-Objektes, das einer Komponente X darstellt, auf Punkte eines anderen CAD-Objektes, das dieselbe Komponente X darstellt und Bestandteil eines anderen CAD-Modells ist, abgebildet werden können. Im einfachsten Fall kann es sich hierbei um eine Transformationsvorschrift handeln, die die Koordinaten der Punkte des einen CAD-Objektes eins zu eins - also unverändert - auf Koordinaten des anderen CAD-Objektes abbildet. Dies kann z.B. dann der Fall sein, wenn die CAD-Modelle beziehungsweise die CAD-Objekte, auf die die Transformationsvorschrift angewendet werden muss, in ein und derselben CAD-Software erzeugt wurden.

Dies wird jedoch häufig nicht der Fall sein. In der Regel werden das erste und zweite CAD-Modell in unterschiedlichen CAD-Entwicklungsumgebungen erstellt worden sein. Dies hat häufig zur Folge, dass sich die geometrische Anordnung der Hüllgeometriepunkte in den beteiligten CAD-Entwicklungsumgebungen voneinander unterscheidet. In diesen Fällen existiert jedoch eine eineindeutige Transformationsvorschrift, die besagt, wo sich Punkte eines CAD-Objektes, welches einer physikalischen Komponente zugeordnet ist, in einer anderen CAD-Softwareumgebung wiederfinden.

Ist eine solche Transformationsvorschrift nicht bekannt, so kann diese beispielsweise mithilfe des in der nicht vorveröffentlichten Patentanmeldung mit dem amtlichen Aktenzeichen PCT/EP2008/000784 beschriebenen Verfahrens automatisch abgeleitet werden.

Der Grundgedanke der Erfindung liegt nun darin, die eingangs erwähnte Transformationsvorschrift zu verwenden, um zu überprüfen, ob das erste und zweite CAD-Objekt Teil des im zweiten CAD Modell vorhandenen CAD-Gruppenobjekts sind. Um dies zu ermöglichen, wird die Transformationsvorschrift zunächst auf den ersten Punkt der ersten Hüllgeometrie des ersten CAD Objektes angewandt. Ergebnis der Transformation ist der zweite Punkt. Analog wird der vierte Punkt berechnet, indem die Transformation auf den dritten Punkt der zweiten Hüllgeometrie der zweiten Automatisierungskomponente angewandt wird.

Es liegt in der Natur der Transformation, dass der zweite Punkt zu derselben Automatisierungskomponente im zweiten CAD-Modell gehört wie der erste Punkt im ersten CAD Modell. Analoges gilt für den dritten und den vierten Punkt. Im Anschluss an die Transformation wird überprüft, ob das Ergebnis der Transformation - der zweite und der vierte Punkt - innerhalb der dritten Hüllgeometrie des CAD Gruppenobjektes angeordnet sind. Sollte dies der Fall sein, ist davon auszugehen, dass die dritte Hüllgeometrie das erste und zweite CAD-Objekt umschließt.

Das erfindungsgemäße Engineeringsystem erkennt auf diese Art und Weise automatisch, dass eine Gruppierungsbeziehung zwischen dem CAD-Gruppenobjekt und dem ersten und zweiten CAD-Objekt vorliegt. Das Engineeringsystem wird nun ebenfalls automatisch eine entsprechende hierarchische Datenstruktur, die eingangs auch als Ressourcenstruktur bezeichnet wurde, aufbauen. Innerhalb dieser Ressourcenstruktur ist für einen Anwender zu erkennen, dass das erste und zweite CAD-Objekt dem CAD-Gruppenobjekt hierarchisch untergeordnet sind.

Das erfindungsgemäße Engineeringsystem ist also in der Lage, einen Zusammenhang zwischen abstrakteren CAD-Objekten eines höheren Abstraktionsgrads zu den spezifischen Ausgestaltungen dieser CAD-Objekte in einer detaillierteren Modellierung herzustellen. Diese Aufgabe kann durch die Anwendung der Transformationsvorschrift automatisiert durchgeführt werden und muss nicht wie im Stand der Technik händisch und damit viel anfällig von einem Benutzer umgesetzt werden. Die automatisiert erstellte hierarchische Ressourcenstruktur ermöglicht es, Änderungen der CAD-Objekte beziehungsweise der CAD-Gruppenobjekte, die in den verschiedenen dem Engineeringsystem untergeordneten Quellsystemen durchgeführt werden, mittels des Engineeringsystems zu synchronisieren. Durch das Erkennen der Zusammenhänge zwischen untergeordneten CAD-Objekten und übergeordneten CAD-Gruppenobjekten wird eine Übernahme und Synchronisierung von Daten zwischen den einzelnen Modellierungsebenen und den Domänen der digitalen Fabrik erst ermöglicht.

Um dem Anwender des Engineeringsystems den Überblick über einen hierarchischen Aufbau insbesondere komplexer automatisierungstechnischer Anlagen zu erleichtern, wird in vorteilhafter Ausgestaltung der Erfindung innerhalb einer grafischen Benutzeroberfläche des Engineeringsystems bei existierender Gruppierungsbeziehung die hierarchische Ordnung zwischen dem CAD-Gruppenobjekt und den CAD-Objekten durch einen Ressourcenbezeichner und insbesondere eingerückt dargestellte Subressourcenbezeichner visualisiert, wobei über den Ressourcenbezeichner das CAD-Gruppenobjekt und über die Subressourcenbezeichner die CAD-Objekte von dem Benutzer über die Benutzeroberfläche adressierbar sind.

Bei der Durchführung des erfindungsgemäßen Verfahrens können zwei Fälle auftreten, bei denen Bezeichner innerhalb des Engineeringsystems neu angelegt werden müssen, nachdem eine Gruppierungsbeziehung erkannt wurde.

So kennzeichnet sich eine vorteilhafte Ausführungsform der Erfindung dadurch, dass der Ressourcenbezeichner automatisch neu angelegt und dem CAD-Gruppenobjekt zugewiesen wird, falls die Gruppierungsbeziehung existiert und falls noch kein Ressourcenbezeichner für das CAD-Gruppenobjekt innerhalb des Engineeringsystems angelegt ist.

Es ist jedoch auch möglich, dass der Ressourcenbezeichner bereits existiert, jedoch die Subressourcenbezeichner noch innerhalb des Engineeringsystems angelegt werden müssen. Daher ist eine weitere vorteilhafte Ausgestaltungsform der Erfindung dadurch gekennzeichnet, dass die Subressourcenbezeichner automatisch neu angelegt und den CAD-Objekten zugewiesen werden, falls die Gruppierungsbeziehung existiert und falls noch kein Subressourcenbezeichner für die CAD Objekte innerhalb des Engineeringsystems angelegt sind.

Die Überprüfung der Gruppierungsbeziehung kann in vorteilhafter Ausgestaltung der Erfindung dadurch sehr einfach und nachvollziehbar durchgeführt werden, dass der erste Punkt der Mittelpunkt der ersten Hüllgeometrie und der zweite Punkt der Mittelpunkt der zweiten Hüllgeometrie ist.

Wie bereits eingangs erwähnt, kommt es insbesondere bei der Planung komplexer automatisierungstechnischer Systeme, bei denen es sich im Extremfall sogar um ganze Fabriken handeln kann, häufig zu einer Verwendung einer Vielzahl verschiedenster CAD-Entwicklungswerkzeuge. Bei solchen Anwendungsfällen stammen das erste und das zweite CAD-Modell häufig aus verschiedenen CAD-Systemen. Entsprechend vorteilhaft ist eine Ausgestaltungsform der Erfindung, bei der das erste CAD-Modell in einem ersten CAD-System und das zweite CAD-Modell in einem zweiten CAD-System vorliegt.

Im Folgenden wird die Erfindung anhand der in den Figuren dargestellten Ausführungsbeispiele näher beschrieben und erläutert. Es zeigen:

FIG 1    eine schematische Darstellung einer Ausführungsform des erfindungsgemäßen Verfahrens und

FIG 2    einer Ausführungsform des erfindungsgemäßen Verfahrens zur computergestützten, automatisierten hierarchischen Zuordnung zwischen CAD-Objekten zweier CAD-Modelle, die einen Bandförderer darstellen.

FIG 3    eine Qualifizierung eines ersten CAD Objektes in einem ersten 3-dimensionalen CAx System mit einem Datensatz, mit dem bereits ein zweites CAD Objekt in einem zweiten 3-dimensionalen CAx System qualifiziert ist,

FIG 4    eine Qualifizierung eines ersten CAD Objektes in einem ersten 3-dimensionalen CAx System mit einem Datensatz, mit dem bereits ein zweites CAD Objekt in einem zweiten 2-dimensionalen CAx System qualifiziert ist und

FIG 5    eine Qualifizierung eines ersten CAD Objektes in einem ersten 2-dimensionalen CAx System mit einem Datensatz, mit dem bereits ein zweites CAD Objekt in einem zweiten 3-dimensionalen CAx System qualifiziert ist.

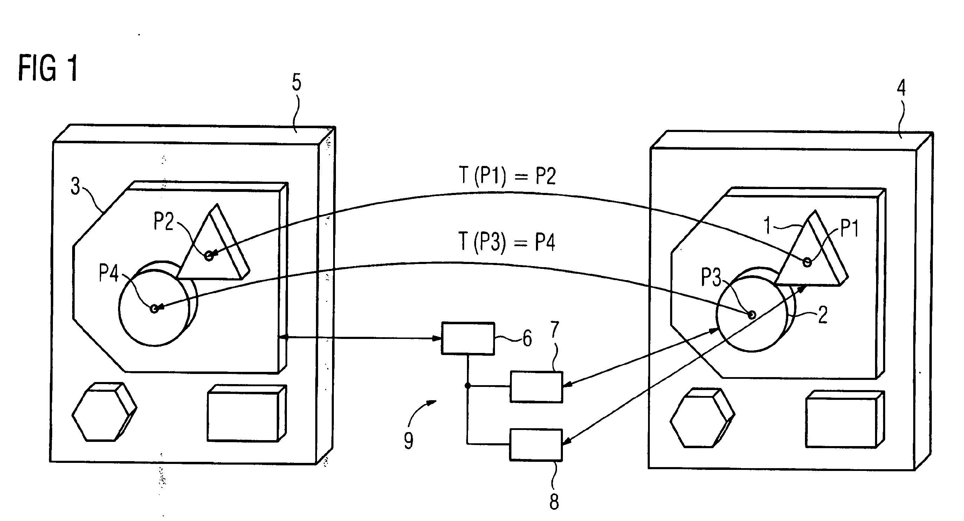

FIG 1 zeigt eine schematische Darstellung einer Ausführungsform des erfindungsgemäßen Verfahrens. Vereinfacht sind in der hier gewählten Darstellung die CAD-Objekte durch einfache geometrische Symbole repräsentiert. Diese Darstellung wurde gewählt, um die wesentlichen erfindungsgemäßen Verfahrensschritte leichter darstellen zu können.

Es sei nun angenommen, dass ein Automatisierungssystem in zwei CAD-Repräsentationen vorliegt, nämlich in Form eines ersten CAD-Modells 4 und eines zweiten CAD-Modells 5. Der Abstraktionsgrad, der diesen beiden CAD-Modellen 4, 5 zu Grunde liegt, ist unterschiedlich. So werden im ersten CAD-Modell eine erste und eine zweite Automatisierungskomponente durch ein erstes CAD-Objekt und ein zweites CAD-Objekt modelliert. Das erste CAD-Objekt ist hierbei durch eine erste Hüllgeometrie 1 dargestellt, während das zweite CAD-Objekt 2 durch eine zweite Hüllgeometrie 2 repräsentiert wird.

Im zweiten CAD-Modell 5 liegen hingegen keine spezifischen CAD-Objekte für die erste und zweite Automatisierungskomponente vor. Hingegen finden sich diese beiden Automatisierungskomponenten als Teil einer dritten Hüllgeometrie 3 im zweiten CAD-Modell 5 wieder. Somit besitzt das zweite CAD-Modell 5 einen höheren Abstraktionsgrad als das erste CAD-Modell 4. Zwei derartige Modelle ein und desselben technischen Systems könnten z.B. bei der digitalen Fabrikplanung zu unterschiedlichen Zeiten entstehen. So würde typischerweise das abstraktere zweite CAD-Modell 5 in einer sehr frühen Planungsphase entstehenden, während das erste detailliertere CAD-Modell 4 später im Planungsprozess zur spezifischeren Auslegung der einzelnen Automatisierungskomponenten entwickelt wird.

In dem hier dargestellten Szenario liegt also im zweiten CAD-Modell 5 eine Hüllgeometrie - die dritte Hüllgeometrie 3 - vor, die die Hüllgeometrien 1, 2 des ersten und zweiten CAD-Objektes vollständig einschließt. Offensichtlich liegt also eine Gruppierungsbeziehung zwischen dem durch die dritte Hüllgeometrie 3 dargestellten Gruppenobjekt und dem durch die erste und zweite Hüllgeometrie 1, 2 repräsentierten ersten und zweiten CAD-Objekt vor. Eine solche Gruppierungsbeziehung kann mithilfe des erfindungsgemäßen Verfahrens erkannt werden.

Hierzu wird zunächst sowohl auf einen ersten Punkt P1 der ersten Hüllgeometrie 1 als auch auf einem dritten Punkt P3 der zweiten Hüllgeometrie 2 eine Transformationsvorschrift T angewandt. Als Ergebnis dieser Transformationsvorschrift erhält man einen zweiten Punkt P2 und einen vierten Punkt P4 im zweiten CAD-Modell 5. Ein zur Durchführung dieses Verfahrens eingerichtetes Engineeringsystem stellt nun fest, dass sich sowohl der zweite Punkt P2 als auch der vierte Punkt P4 innerhalb der dritten Hüllgeometrie 3 befinden. Aufgrund dessen geht das Engineeringsystem davon aus, dass zwischen dem durch die dritte Hüllgeometrie 3 dargestellten CAD-Gruppenobjekt und dem ersten und zweiten CAD-Objekt eine Gruppierungsbeziehung existiert. Infolgedessen erzeugt das Engineeringsystem eine hierarchische Ordnung 9, in der ein erster Subressourcenbezeichner 8, der das erste CAD-Objekt bezeichnet, und ein zweiter Subressourcenbezeichner 7, der das zweite CAD-Objekt bezeichnet, einem dem CAD-Gruppenobjekt zugeordneten Ressourcenbezeichner 6 hierarchisch unterordnet sind. Eine derartige hierarchische Ordnung stellt das Engineeringsystem schließlich in Form eines Dateibaums für einen Benutzer erkenntlich auf einer grafischen Benutzeroberfläche dar.

Bei der Erzeugung der hierarchischen Ordnung 9 sind verschiedene Fälle denkbar, mit denen das Engineeringsystem konfrontiert ist. In einem ersten Fall sind die CAD-Objekte und das CAD-Gruppenobjekt im Engineeringsystem bereits durch die entsprechenden Subressourcenbezeichner 7, 8 beziehungsweise den Ressourcenbezeichner 6 qualifiziert. Das heißt, diese Bezeichner sind bereits angelegt und den zugehörigen CAD-Komponenten zugeordnet. Jedoch ist die Gruppierungsbeziehung zwischen den CAD-Objekten und dem CAD-Gruppenobjekt im Engineeringsystem zunächst noch nicht bekannt und daher auch noch nicht als hierarchische Ordnung 9 abgebildet. Bei einer solchen Ausgangslage wird das Engineeringsystem bei der Durchführung des Verfahrens lediglich die schon angelegten Ressourcen- beziehungsweise Subressourcenbezeichner 6, 7, 8 entsprechend der erkannten Gruppierungsbeziehung anordnen.

In einem zweiten Fall sind lediglich das erste und zweite CAD-Objekt bereits durch die Subressourcenbezeichner 7, 8 bereits qualifiziert. Das CAD-Gruppenobjekt, welches durch die dritte Hüllgeometrie 3 im zweiten CAD-Modell 5 dargestellt ist, ist noch nicht im Engineeringsystem qualifiziert. Das heißt, der Ressourcenbezeichner 6 ist im Engineeringsystem noch nicht angelegt. In diesem Fall wird das Engineeringsystem, nachdem es die Gruppierungsbeziehung erkannt hat, den Ressourcenbezeichner 6 neu anlegen und anschließend die hierarchische Ordnung 9 erzeugen.

In einem dritten Fall ist lediglich das CAD-Gruppenobjekt durch den Ressourcenbezeichner 6 vor Ablauf des Verfahrens bereits im Engineeringsystem qualifiziert. Die Subressourcenbezeichner 7, 8 existieren noch nicht. Nach dem die Gruppierungsbeziehung erkannt wurde, wird das Engineeringsystem die entsprechenden Subressourcenbezeichner 7, 8 anlegen und anschließend die dargestellte hierarchische Ordnung 9 generieren.

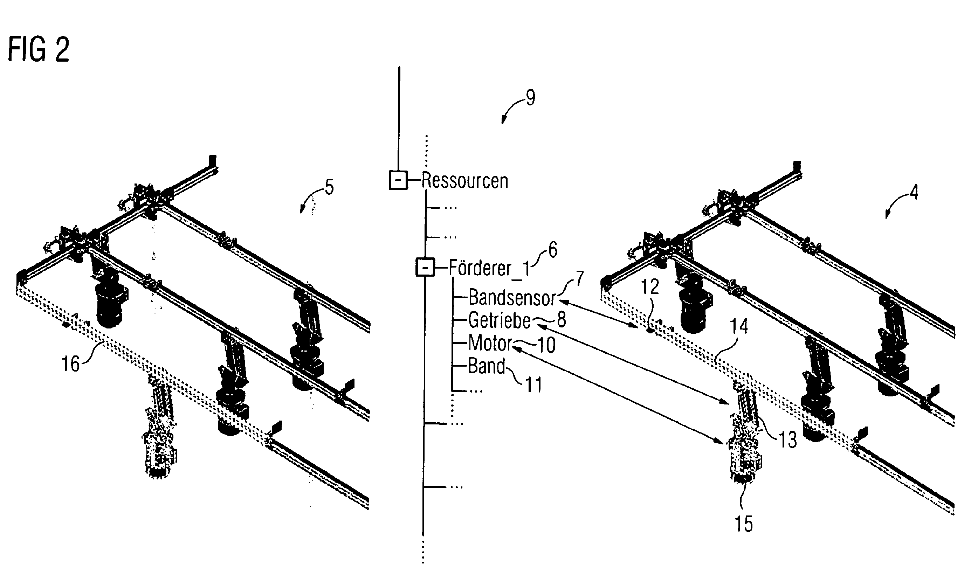

Figur 2 zeigt einer Ausführungsform des erfindungsgemäßen Verfahrens zur computergestützten, automatisierten hierarchischen Zuordnung zwischen CAD-Objekten 12,13,14,15,16 zweier CAD-Modelle 4,5, die einen Bandförderer darstellen. Bezüglich der Entstehung der beiden CAD-Modelle 4,5 ist folgendes Szenario denkbar. Zunächst wurde in einer ersten CAD-Software ein Grobkonzept der automatisierungstechnischen Anlage mit dem Bandförderer erstellt. In diesem Grobkonzept wurde der Bandförderer zunächst als eine automatisierungstechnische Einheit betrachtet. In einem den beiden CAD-Systemen übergeordneten Engineeringsystem waren die Elemente des gröberen CAD-Modells, im Folgenden als zweites CAD-Modell 5 bezeichnet, bereits bekannt. Hierzu wurden die entsprechenden Elemente im Engineeringsystem mit Bezeichnern qualifiziert. So wurde ein CAD-Gruppenobjekt 16, das den Bandförderer im zweiten CAD-Modell repräsentiert, mit einem Ressourcenbezeichner 6 qualifiziert, der "Förderer" lautet.

Im Laufe des Entwicklungsprozesses der automatisierungstechnischer Anlage wurde das zweite CAD Modell 5 in ein anderes CAD-System exportiert, um die in dem zweiten CAD-Modell 5 vorhandenen Automatisierungskomponenten weiter zu detaillierten. In diesem anderen CAD-Modell entsteht folglich ein weiteres CAD-Modell, welches im Folgenden als erstes CAD-Modell 4 bezeichnet wird und dieselbe automatisierungstechnische Anlage beschreibt. Anstelle einer abstrakten Zeichnung für den Bandförderer enthält das erste CAD-Modell 4 nun sehr viel genauere Informationen über dessen Aufbau. So sind beispielsweise die einzelnen Komponenten des Förderbandes nunmehr durch Bauteile aus Produktkatalogen beschrieben. Das Förderband ist nun durch eine Vielzahl herstellerspezifischer Elemente beschrieben, die nun an die Stelle der verallgemeinerten abstrakten Modellierung des Förderbandes durch das CAD-Gruppenobjekt 16 treten. So wird das Förderband im ersten CAD-Modell 4 nun durch einzelne CAD-Objekte 12,13, 14,15 beschrieben, von denen ein erstes CAD-Objekt 12 einen Bandsensor darstellt, ein zweites CAD-Objekt 13 ein Getriebe des Bandförderers repräsentiert, ein drittes CAD-Objekt 15 einen Motor des Bandförderers darstellt und ein viertes CAD-Objekt 14 schließlich das Band selbst repräsentiert.

Das so erzeugte detailliertere erste CAD-Modell 4 soll anschließend wieder dem Engineeringsystem bekannt gemacht werden, wobei eine Synchronisation der Daten, die gleiche Automatisierungskomponenten beschreiben, angestrebt wird. Dieser Vorgang, bei dem auch hierarchische Abhängigkeiten erkannt werden sollen, kann mithilfe des Engineeringsystems automatisiert durchgeführt werden. Hierzu wird unter Anwendung einer Ausführungsform des erfindungsgemäßen Verfahrens untersucht, welche Elemente des neuen ersten CAD-Modells 4 eine räumliche Übereinstimmung zu Objekten des ursprünglichen zweiten CAD-Modells 5 aufweisen. Hierbei erkennt das System, dass die CAD-Objekte 12, 13,14, 15 beziehungsweise die Mittelpunkte deren Hüllgeometrien von der Hüllgeometrie des CAD Gruppenobjektes 16 umschlossen werden. Um dies zu ermöglichen, wird die Transformation angewandt, die die Mittelpunkte der Hüllgeometrien der CAD-Objekte 12,13, 14,15 auf entsprechende Punkte gleicher Automatisierungskomponenten im zweiten CAD-Modell 5 abbildet.

Da die einzelnen CAD-Objekte 12,13, 14,15 in dem Engineeringsystem zunächst noch nicht qualifiziert waren, legte das Engineeringsystem automatisch für jedes dieser CAD-Objekte 12,13, 14,15 jeweils einen Subressourcenbezeichner 7, 8, 10, 11 an, von denen ein erster Subressourcenbezeichner 7 den Namen "Bandsensor" trägt, ein zweiter Subressourcenbezeichner 8 den Namen "Getriebe" trägt, ein dritter Subressourcenbezeichner 10 den Namen "Motor" trägt und schließlich ein vierter Subressourcenbezeichner 11 den Namen "Band" trägt. Da das Engineeringsystem durch die Überprüfung der Lage der Mittelpunkte der beteiligten CAD-Objekte 12,13, 14,15 beziehungsweise deren Hüllgeometrien die Gruppierungsbeziehung erkannt hat, stellte es den Ressourcenbezeichner 6 und die Subressourcenbezeichner 7, 8, 10, 11 direkt in einer hierarchischen Ordnung 9 dar, bei der die Subressourcenbezeichner 7, 8, 10, 11 unter dem Ressourcenbezeichner 6 eingerückt angezeigt werden. Auf diese Art und Weise ist für den Anwender des Engineeringsystems die erkannte Gruppierungsbeziehung direkt visualisiert.

Innerhalb des Engineeringsystems werden auf diese Art und Weise die einzelnen Modelle der unterschiedlichen Detaillierungsstufen zusammengeführt und in eine logische und für eine spätere Weiterverarbeitung vorteilhafte Beziehung gebracht.

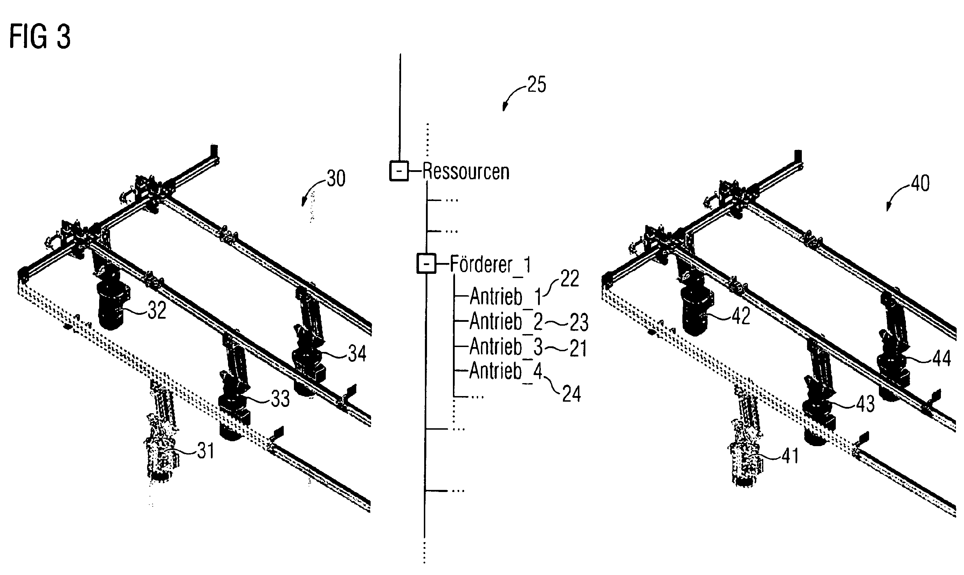

Im Folgenden soll anhand der Figuren 3 bis 5 dargestellt werden, wie die Transformationsvorschrift automatisch mithilfe des Engineeringsystems abgeleitet werden kann, falls diese vor Ablauf des Verfahrens dem System noch nicht bekannt sein sollte.

FIG 3 zeigt eine Qualifizierung eines ersten CAD Elementes 31 in einem ersten dreidimensionalen CAx System 30 mit einem Datensatz 21, mit dem bereits ein zweites CAD Element 41 in einem zweiten dreidimensionalen CAx System 40 qualifiziert ist. Die Abkürzung CAx steht wie allgemein üblich für sämtlich "Computer Aided" Systeme. Das "x" stellt also einen Platzhalter dar. Bei den besagten CAx Systemen handelt es sich beispielsweise um CAD oder CAE Systeme. Die Abkürzung CAD steht wie allgemein üblich für "Computer Aided Design" und bezeichnet die rechnergestützte Konstruktion. Somit bezeichnen CAD Systeme grafisch orientierte Computerprogramme, mit denen sich zwei- oder dreidimensionale Layouts herstellen lassen. Der Begriff CAE steht stellvertretende für "Computer Aided Engineering" und bezeichnet die rechnergestützte Entwicklung. Der Begriff ist ähnlich zu verstehen wie Computer Aided Design, welches ein Teil des CAE ist. Zusätzlich zur Modellierung und Konzeption beinhaltet CAE aber auch fortschrittliche Analysen, Simulationen vieler physikalischer Vorgänge oder Optimierungswerkzeuge. Unter dem Begriff "Qualifizierung" ist hier sowie im gesamten Dokument ganz allgemein die Zuordnung eines Datensatzes zu einem CAD Objekt innerhalb eines CAx Systems zu verstehen.

Bei den beiden CAx Systemen 30,40 handelt es sich um CAD Entwicklungsumgebungen. Die erste und zweite CAD Entwicklungsumgebung 30,40 werden in dem dargestellten Anwendungsbeispiel zur digitalen Planung eines industriellen Fertigungssystems eingesetzt. Dargestellt sind jeweils Komponenten eines Fördersystems, welches zur Förderung von automatisiert zu fertigenden Produkten eingesetzt wird. In beiden CAD Entwicklungsumgebung 30,40 werden die Komponenten des Automatisierungssystems durch dreidimensionale Hüllgeometrien modelliert.

Obwohl die dargestellten CAD Modelle auf den ersten Blick gleich aussehen, handelt es sich jedoch um unterschiedliche CAD Entwicklungsumgebungen mit unterschiedlichen Aufgaben. So ist in der ersten CAD Entwicklungsumgebung 30 eine Modellierung der Anlage vorgenommen worden, um Simulationsergebnisse einer Simulation des Automatisierungsprozesses für einen Benutzer sehr anschaulich zu visualisieren. Hingegen dient die zweite CAD Entwicklungsumgebung 40 zur mechanischen Layoutplanung des Automatisierungssystems. Entsprechend stecken in der zweiten CAD Entwicklungsumgebung 40 sehr viel mehr Informationen für die einzelnen zu modulierenden Systemkomponenten, als es in der ersten CAD Entwicklungsumgebung 40 der Fall ist. Die erste CAD Entwicklungsumgebung 30 kann auf eine abgespeckte Variante der Datenmodelle zugreifen, die in der zweiten CAD Entwicklungsumgebung 40 verwendet werden.

Zur einheitlichen Datenhaltung wird ein Produktdatenmanagementsystem 25 verwendet, bei dem es sich in spezieller Ausprägung auch um ein Engineeringsystem handeln kann. Innerhalb dieses Produktdatenmanagementsystems 25 werden Datensätze 21..24 verwaltet, auf die beide CAD Entwicklungsumgebungen 30,40 Zugriff haben. Den einzelnen Komponenten des Automatisierungssystems, die auch als Ressourcen bezeichnet werden, sind diese Datensätze 21,22,23,24 zugeordnet. Die CAD Elemente 41,42,43,44, die in der zweiten CAD Entwicklungsumgebung 40 zur Modulierung dieser Ressourcen angelegt sind, sind bereits mit den entsprechenden Datensätzen 21, 22, 23, 29 qualifiziert. Innerhalb der ersten CAD Entwicklungsumgebung 30 ist ein erstes CAD Element 31 hingegen noch nicht mit dem entsprechenden Datensatz 21 qualifiziert. Jedoch finden sich auch in der ersten CAD Entwicklungsumgebung 30 drei weitere Komponenten, die durch weitere CAD Elemente 32,33,34 modelliert werden, wobei diese weiteren ersten CAD Elemente 32,33, 34 bereits mit weiteren Datensätzen 22,23,24 qualifiziert sind. Zusammengefasst existieren also mindestens drei Komponenten des Automatisierungssystems, die in beiden CAD Entwicklungsumgebungen 30,40 qualifiziert sind. Diese drei Komponenten reichen aus, um eine allgemeine Transformationsvorschrift zu bestimmen, mit der sich für jedes CAD Element 41,42,43,44 der zweiten CAD Entwicklungsumgebung 40 die Koordinaten eines CAD Elementes 31,32,33,34 innerhalb der ersten CAD Entwicklungsumgebung 30 berechnen zu lassen, welches dieselbe Komponente des Automatisierungssystems beschreibt. Bei dieser Transformationsvorschrift handelt es sich um eine lineare Abbildung, die der folgenden Formel folgt:

$$\begin{pmatrix} A_1 \\ A_2 \\ A_3 \end{pmatrix} = \begin{pmatrix} x_{11} & x_{12} & x_{13} \\ x_{21} & x_{22} & x_{23} \\ x_{31} & x_{32} & x_{33} \end{pmatrix} \cdot \begin{pmatrix} B_1 \\ B_2 \\ B_3 \end{pmatrix}$$

Mit den Koordinaten $A_1$-$A_3$ ist hierbei ein Punkt eines CAD Elementes 31,32,33,34 der ersten CAD Entwicklungsumgebung 30 gemeint und mit den Koordinaten $B_1$-$B_3$ ein Punkt eines CAD Elementes 21,22,23,24 innerhalb der zweiten CAD Entwicklungsumgebung 40. Aus den bekannten drei Komponenten Antrieb_1, Antrieb_2 und Antrieb_4 lässt sich nun die Abbildungsmatrix X bestimmen. Hierzu muss lediglich ein entsprechendes Gleichungssystem mit den aus der linearen Algebra bekannten Methoden gelöst werden.

Für die Koordinaten der weiteren Komponenten, die bereits zu Beginn des Verfahrens in beiden CAD Entwicklungsumgebungen 30, 40 qualifiziert sind, können jeweils die Mittelpunkte der den CAD Elementen 32,33,34,42,43,44 zugehörigen Hüllgeometrien verwendet werden. Werden diese Punkte für jedes bereits qualifizierte CAD Element 32,33,34,42,43,44 bei der Aufstellung des zu lösenden Gleichungssystems eingesetzt, so erhält man eine Transformationsmatrix X, mit der sich Mittelpunkte noch nicht qualifizierter CAD Elemente 31 der ersten CAD Entwicklungsumgebung 30 aus den Mittelpunkten der zugehörigen CAD Elemente 41 der zweiten CAD Entwicklungsumgebung 40 berechnen lassen. Durch diese Berechnung können die CAD Elemente in der ersten CAD Entwicklungsumgebung 30 identifiziert und anschließend qualifiziert werden.

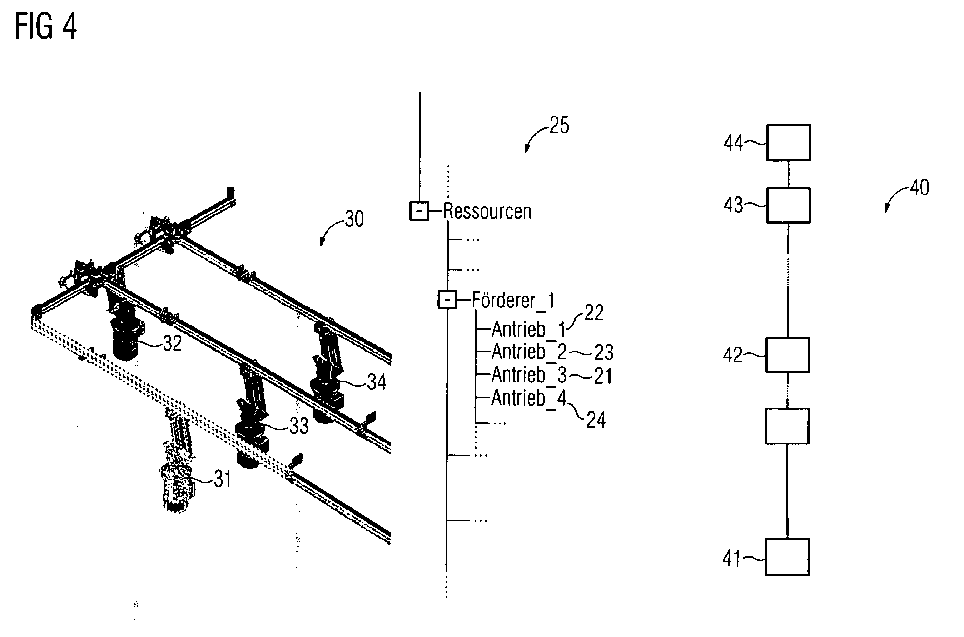

FIG 4 zeigt eine Qualifizierung eines ersten CAD Elementes 31 in einer ersten dreidimensionalen CAD Entwicklungsumgebung 30 mit einem Datensatz 21, mit dem bereits ein zweites CAD Element 21 in einer zweiten zweidimensionalen CAD Entwicklungsumgebung 40 qualifiziert ist. Bei den beiden CAx Entwicklungsumgebungen 30,40 handelt es sich um CAD Entwicklungsumgebungen. In dem hier dargestellten Beispiel ist die zweite CAD Entwicklungsumgebung 40, in dem sämtliche CAD Elemente 41-44 bereits mit Datensätzen 21,22,23,24 qualifiziert sind, ein zweidimensionales CAD System, welches lediglich zur schematischen Anordnung der zugehörigen Komponenten vorgesehen ist, um eine Regelungsstrategie zu entwerfen und zu simulieren. Auch hier wird analog zu dem Fall aus FIG 3 angenommen, dass ein erstes CAD Element 11 der ersten CAD Entwicklungsumgebung 30 noch nicht mit dem Datensatz 21 qualifiziert wurde, mit dem bereits ein zweites CAD Element 41 der zweiten CAD Entwicklungsumgebung 40 qualifiziert wurde. Hingegen sind drei weitere Komponenten bereits sowohl in der ersten als auch in der zweiten CAD Entwicklungsumgebung 30,40 mit den entsprechenden weiteren Datensätzen 22,23,24 qualifiziert.

Auch hier gilt es zunächst, eine allgemeine Abbildungsvorschrift zu bestimmen, die Punkte von CAD Elementen 41,42,43, 44 der zweiten CAD Entwicklungsumgebung 40 auf Punkte von CAD Elementen 31,32,33,34 der ersten CAD Entwicklungsumgebung 30 abbildet, die gleiche Komponenten beschreiben bzw. die mit gleichen Datensätzen 21,22,23,24 qualifiziert werden sollen. Die entsprechende Abbildungsvorschrift folgt der folgenden Gleichung, wobei $A_1$-$A_3$ wieder die Koordinaten eines Punktes in ersten CAD Entwicklungsumgebung 30 beschreiben und $B_1$- $B_2$ für Koordinaten eines Punktes in der zweiten CAD Entwicklungsumgebung 40 stehen:

$$\begin{pmatrix} A_1 \\ A_2 \\ A_3 \end{pmatrix} = \begin{pmatrix} x_{11} & x_{12} \\ x_{21} & x_{22} \\ x_{31} & x_{32} \end{pmatrix} \cdot \begin{pmatrix} B_1 \\ B_2 \end{pmatrix}$$

Zur Lösung dieses Gleichungssystems sind wieder mindestens drei weitere Komponenten notwendig, die in beiden CAD Entwicklungsumbegungen 30,40 qualifiziert sind. Auf diese Art und Weise erhält man sechs Gleichungen, die zur Lösung der unbekannten $x_{11}$, $x_{12}$, $x_{21}$, $x_{22}$, $x_{31}$, $x_{32}$ verwendet werden können.

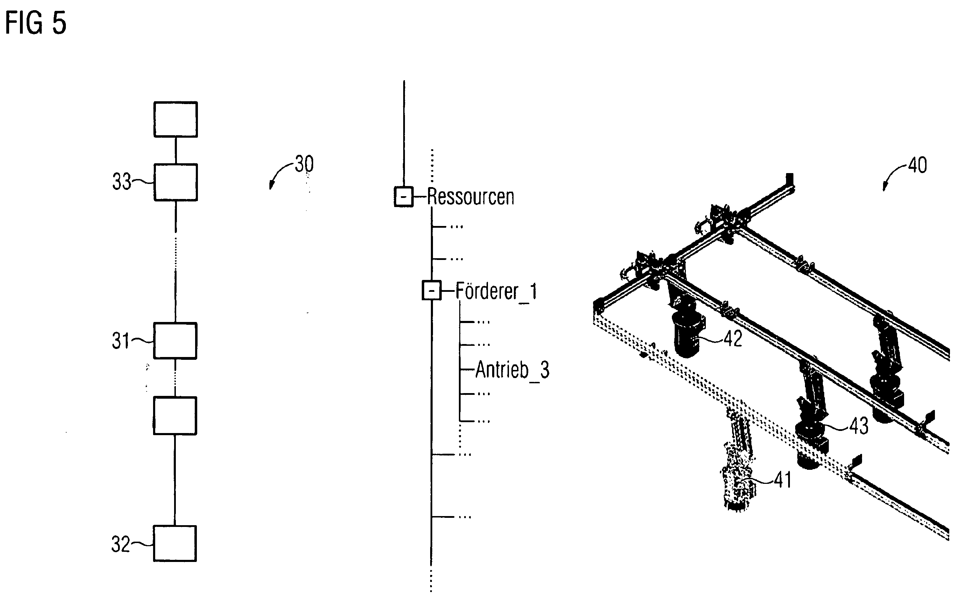

Schließlich zeigt FIG 5 eine Qualifizierung eines ersten CAD Elementes 31 in einer ersten zweidimensionalen CAx Entwicklungsumgebung 30 mit einem Datensatz 21, mit dem bereits ein zweites CAD Element 41 in einer zweiten dreidimensionalen CAx Entwicklungsumgebung 40 qualifiziert ist. Bei den beiden CAx Systemen 30,40 handelt es sich wieder um CAD Entwicklungsumgebungen. Hier sei nun der umgekehrte Fall von dem in FIG 4 dargestellten Anwendungsfall angenommen. D.h., sämtliche Komponenten des zu modulierenden Automatisierungssystems sind in der dreidimensionalen zweiten CAD Entwicklungsumgebung 40 qualifiziert. In der ersten CAD Entwicklungsumgebung 30 hingegen sind lediglich zwei Komponenten des Automatisierungssystems bereits qualifiziert. Eine allgemeine Abbildungsvorschrift lässt sich durch die nachstehende Gleichung angeben, wobei $A_1$-$A_2$ wieder die Koordinaten eines Punktes in der ersten CAD Entwicklungsumgebung beschreiben und $B_1$- $B_3$ für Koordinaten eines Punktes in der zweiten CAD Entwicklungsumgebung 40 stehen:

$$\begin{pmatrix} A_1 \\ A_2 \end{pmatrix} = \begin{pmatrix} x_{11} & x_{12} & x_{13} \\ x_{21} & x_{22} & x_{23} \end{pmatrix} \cdot \begin{pmatrix} B_1 \\ B_2 \\ B_3 \end{pmatrix}$$

Diese Abbildungsvorschrift zeigt, dass hier nur zwei Komponenten notwendig sind, die in beiden CAD Entwicklungsumbegungen 30,40 qualifiziert sind, um die sechs unbekannten Matrixkomponenten zu berechnen.

**Patentansprüche**

1. Verfahren zur computergestützten, automatisierten hierarchischen Zuordnung von CAD-Objekten (12,13,14,15) eines ersten CAD-Modells (4) einer automatisierungstechnischen Anlage zu CAD-Gruppenobjekten (16) eines zweiten CAD-Modells (5) der automatisierungstechnischen Anlage mit Hilfe eines Engineeringsystems, welches zur hierarchisch strukturierten Datenverwaltung der CAD-Objekte (12,13,14,15) und CAD-Gruppenobjekte (16) eingerichtet ist, wobei zur Durchführung des Verfahrens eine Transformationsvorschrift verwendet wird, die Punkte einer innerhalb des ersten CAD-Modells (4) modellierten Komponente der automatisierungstechnischen Anlage auf Punkte derselben Komponente des zweiten CAD-Modells (5) abbildet, wobei das Verfahren folgende Verfahrensschritte aufweist:

- Anwendung der Transformationsvorschrift auf mindestens einen ersten Punktes (P1) einer ersten Hüllgeometrie (1) eines eine erste Automatisierungskomponente darstellenden ersten CAD-Objektes (12) des ersten CAD-Modells (4) zur Berechnung eines zweiten Punktes (P2) im zweiten CAD-Modell (5) und auf mindestens einen dritten Punkt (P3) einer zweiten Hüllgeometrie (2) eines eine zweite Automatisierungskomponente darstellenden zweiten CAD-Objektes (13) des ersten CAD-Modells (4) zur Berechnung eines vierten Punktes (P4) im zweiten CAD-Modell (5),
- Überprüfung der Existenz einer Gruppierungsbeziehung, die als erfüllt gilt, wenn der zweite und der vierte Punkt (P2,P4) innerhalb einer dritten Hüllgeometrie (3) eines CAD-Gruppenobjektes (16) des zweiten CAD-Modells (5) angeordnet sind, und ,falls diese Gruppenbeziehung existiert,
- Erzeugung einer hierarchischen Ordnung (9) innerhalb des Engineeringsystems, bei der das erste und zweite CAD-Objekt (12,13) dem CAD-Gruppenobjekt (16) hierarchisch untergeordnet sind.

2. Verfahren nach Anspruch 1, wobei innerhalb einer grafischen Benutzeroberfläche des Engineeringsystems bei existierender Gruppierungsbeziehung die hierarchische Ordnung zwischen dem CAD-Gruppenobjekt (16) und dem ersten und zweiten CAD-Objekt (12,13) durch einen Ressourcenbezeichner (6) und insbesondere eingerückt dargestellte erste und zweite Subressourcenbezeichnern (7,8) visualisiert wird, wobei über den Ressourcenbezeichner (6) das CAD-Gruppenobjekt und über die Subressourcenbezeichner (7,8) das erste und zweite CAD-Objekt (12,13) von einem Benutzer über die Benutzeroberfläche adressierbar sind.

3. Verfahren nach Anspruch 2, wobei der Ressourcenbezeichner (6) automatisch neu angelegt und dem CAD-Gruppenobjekt (16) zugewiesen wird, falls die Gruppierungsbeziehung existiert und falls noch kein Ressourcenbezeichner für das CAD-Gruppenobjekt (16) innerhalb des Engineeringsystems angelegt ist.

4. Verfahren nach einem der Ansprüche 2 bis 3,

wobei die Subressourcenbezeichner (7,8) automatisch neu angelegt und dem ersten und zweiten CAD-Objekt (12,13) zugewiesen werden, falls die Gruppierungsbeziehung existiert und falls noch keine Subressourcenbezeichner (7,8) für das erste und zweite CAD-Objekt (12,13) innerhalb des Engineeringsystems angelegt sind.

5. Verfahren nach einem der vorhergehenden Ansprüche,
wobei der erste Punkt (P1) der Mittelpunkt der ersten Hüllgeometrie (1) und der dritte Punkt (P3) der Mittelpunkt der zweiten Hüllgeometrie (2) ist.

6. Verfahren nach einem der vorhergehenden Ansprüche,
wobei das erste CAD-Modell (4) in einem ersten CAD-System und das zweite CAD-Modell (5) in einem zweiten CAD-System vorliegt.

7. Engineeringsystem zur computergestützten, automatisierten hierarchischen Zuordnung von CAD-Objekten (12,13,14,15) eines ersten CAD-Modells (4) einer automatisierungstechnischen Anlage zu CAD-Gruppenobjekten (16) eines zweiten CAD-Modells (5) der automatisierungstechnischen Anlage, wobei das Engineeringsystem zur hierarchisch strukturierten Datenverwaltung der CAD-Objekte (12,13,14,15) und CAD-Gruppenobjekte (16) eingerichtet ist, und wobei das Engineeringsystem zur Anwendung einer Transformationsvorschrift eingerichtet ist, die Punkte einer innerhalb des ersten CAD-Modells (4) modellierten Komponente der automatisierungstechnischen Anlage auf Punkte derselben Komponente des zweiten CAD-Modells (5) abbildet, wobei das Engineeringsystem

- Mittel zur Anwendung der Transformationsvorschrift auf mindestens einen ersten Punkt (P1) einer ersten Hüllgeometrie (1) eines eine erste Automatisierungskomponente darstellenden ersten CAD-Objektes (12) des ersten CAD-Modells (4) zur Berechnung eines zweiten Punktes (P2) im zweiten CAD-Modell (5) und auf mindestens einen dritten Punkt (P3) einer zweiten Hüllgeometrie (2) eines eine zweite Automatisierungskomponente darstellenden zweiten CAD-Objektes (13) des ersten CAD-Modells (4) zur Berechnung eines vierten Punktes (P4) im zweiten CAD-Modell (5),
- Mittel zur Überprüfung der Existenz einer Gruppierungsbeziehung, die als erfüllt gilt, wenn der zweite und der vierte Punkt (P2,P4) innerhalb einer dritten Hüllgeometrie (3) eines CAD-Gruppenobjektes (16) des zweiten CAD-Modells (5) angeordnet sind, und
- Mittel zur Erzeugung einer hierarchischen Ordnung (9) innerhalb des Engineeringsystems, bei der das erste und zweite CAD-Objekt (12,13) dem CAD-Gruppenobjekt (16) hierarchisch untergeordnet sind,

aufweist.

8. Engineeringsystem nach Anspruch 7,
wobei das Engineeringsystem eine grafischen Benutzeroberfläche umfasst, die dazu eingerichtet ist, bei existierender Gruppierungsbeziehung die hierarchische Ordnung zwischen dem CAD-Gruppenobjekt (16) und dem ersten und zweiten CAD-Objekt (12,13) durch einen Ressourcenbezeichner (6) und insbesondere eingerückt dargestellten ersten und zweiten Subressourcenbezeichnern (7,8) zu visualisieren, wobei über den Ressourcenbezeichner (6) das CAD-Gruppenobjekt (16) und über die Subressourcenbezeichner (7,8) das erste und zweite CAD-Objekt (12,13) von einem Benutzer über die Benutzeroberfläche adressierbar sind.

9. Engineeringsystem nach Anspruch 8,
wobei das Engineeringsystem dazu eingerichtet ist, den Ressourcenbezeichner (6) automatisch neu anzulegen und dem CAD-Gruppenobjekt (16) zuzuweisen, falls die Gruppierungsbeziehung existiert und falls noch kein Ressourcenbezeichner für das CAD-Gruppenobjekt (16) innerhalb des Engineeringsystems angelegt ist.

10. Engineeringsystem nach einem der Ansprüche 8 oder 9,
wobei das Engineeringsystem dazu eingerichtet ist, den ersten und zweiten Subressourcenbezeichner (7,8) automatisch neu anzulegen und dem ersten und zweiten CAD-Objekt (12,13) zuzuweisen, falls die Gruppierungsbeziehung existiert und falls noch keine Subressourcenbezeichner für das erste und zweite CAD-Objekt (12,13) innerhalb des Engineeringsystems angelegt sind.

11. Engineeringsystem nach einem der Ansprüche 7 bis 10,
wobei der erste Punkt (P1) der Mittelpunkt der ersten Hüllgeometrie (1) und der dritte Punkt (P3) der Mittelpunkt der zweiten Hüllgeometrie (2) ist.

12. Engineeringsystem nach einem der Ansprüche 7 bis 11,
wobei das erste CAD-Modell (4) in einem ersten CAD-System und das zweite CAD-Modell (5) in einem zweiten CAD-System vorliegt.

**Claims**

1. Method for the computer-assisted automated hierarchical assignment of CAD objects (12,13,14,15) in a first CAD model (4) of an automation technology system to CAD group objects (16) in a second CAD model (5) of the automation technology system with the help of an engineering system which is equipped for hierarchically structured data management for CAD objects (12,13,14,15) and CAD group objects (16) where, for the purpose of carrying out the method, use is made of a transformation algorithm which maps points on a component of the automation technology system, modelled in the first CAD model (4), onto points of the same component in the second CAD model (5), where the method has the following method steps:

- execution of the transformation algorithm on at least one first point (P1) of a first bounding geometry (1) for a first CAD object (12), which represents a first automation component, in the first CAD model (4), to calculate a second point (P3) in the second CAD model (5) and to at least one third point (P3) of a second bounding geometry (2) for a second CAD object (13), which represents a second automation component, in the first CAD model (4), for the purpose of calculating a fourth point (P4) in the second CAD model (5),
- checking for the existence of a grouping relationship, which is deemed to be satisfied if the second and the fourth point (P2,P4) are arranged within a third bounding geometry (3) for a CAD group object (16) in the second CAD model (5) and, if this group relationship exists,
- creation of a hierarchical order (9) within the engineering system, in which the first and the second CAD objects (12,13) are hierarchically subordinate to the CAD group object (16).

2. Method according to claim 1,
whereby, if a group relate exists, the hierarchical order between the CAD group object (16) and the first and second CAD objects (12,13) is visualised in a graphical user interface of the engineering system by the display of a resource label (6) and, in particular, indented first and second subresource labels (7,8), where a user can, via the user interface, address the CAD group object by the resource label (6) and the first and second CAD object (12,13) by the subresource labels (7,8).

3. Method according to claim 2,
whereby the new resource label (6) is automatically created and assigned to the CAD group object (16) if the grouping relationship exists and if a resource label has not yet been created within the engineering system for the CAD group object (16).

4. Method according to one of the claims 2 to 3,
whereby the new subresource labels (7,8) are automatically created and assigned to the first and second CAD objects (12,13) if the grouping relate exists and if subresource labels (7,8) have not yet been created within the engineering system for the first and second CAD objects (12,13).

5. Method according to one of the preceding claims,
whereby the first point (P1) is the centre paint of the first bounding geometry (1) and the third point (P3) is the centre point of the second bounding geometry (2).

6. Method according to one of the preceding claims,
whereby the first CAD model (4) is within a first CAD system and the second CAD model (5) is within a second CAD system.

7. Engineering system for the computer-assisted, automated hierarchical assignment of CAD objects (12,13,14,15) in a first CAD model (4) of an automation technology system to CAD group objects (16) in a second CAD model (5) of the automation technology system, where the engineering system is equipped for hierarchically structured data management for the CAD abject (12,13,14,15) and CAD group objects (16) and where the engineering system is equipped for the use of a transformation algorithm which maps points on a component of the automation technology system, modelled within the first CAD model (4), onto points of the same component in the second CAD model (5), where the engineering system has

- a facility for applying the transformation algorithm to at least one first point (P1) of a first bounding geometry (1) for a first CAD object (12), which represents a first automation component, in the first CAD model (4), for the purpose of calculating a second point (P2) in the second CAD model (5), and to at least one third point (P3) of a second envelope geometry (2) for a second CAD object (13), which represents a second automation component, in the first CAD model (4), for the purpose of calculating a fourth point (P4) in the second CAD model (5),
- a facility for checking for the existence of a grouping relationship, which is deemed to be satisfied if the second and fourth points (P2,P4) are arranged within a third bounding geometry (3) for a CAD group object (16) in the second CAD model (5), and
- a facility for creating a hierarchical order (9) within the engineering system, in which the first and the second CAD objects (12,13) are hierarchically subordinate to the CAD group object (16).

8. Engineering system according to claim 7,

whereby the engineering system incorporates a graphical user interface which is equipped, in the event that a group relate exists, to visualise the hierarchical order between the CAD group object (16) and the first and second CAD objects (12,13) by the display of a resource label (6) and, in particular, indention of first and second subresource labels (7,8), where a user can, via the user interface, address the CAD group object (16) by the resource label (6) and the first and second CAD objects (12,13) by the subresource labels (7,8).

9. Engineering system according to claim 8, whereby the engineering system is equipped to create the new resource label (6) automatically and assign it to the CAD group objet (16) if the group relate exists and if a resource label has not yet been created within the engineering system for the CAD group object (16).

10. Engineering system according to one of the claims 8 or 9, whereby the engineering system is equipped to create the new first and second subresource labels (7,8) automatically and assign them to the first and second CAD objects (12,13) if the group relationship exists and if subresource labels have not yet been created within the engineering system for the first and second CAD objects (12,13).

11. Engineering system according to one of the claims 7 to 10, whereby the first point (P1) is the centre point of the first bounding geometry (1) and the third point (P3) is the centre point of the second bounding geometry (2).

12. Engineering system according to one of the claims 7 to 11, whereby the first CAD model (4) is within a first CAD system and the second CAD model (5) is within a second CAD system.

**Revendications**

1. Procédé d'affectation hiérarchique automatisée assistée par ordinateur d'objets CAD (12, 13, 14, 15) d'un premier modèle CAD (4) d'une installation d'automatisation à des objets CAD de groupe (16) d'un deuxième modèle CAD (5) de l'installation d'automatisation à l'aide d'un système d'ingénierie configuré pour la gestion de données structurée hiérarchiquement des objets CAD (12, 13, 14, 15) et objets CAD de groupe (16), dans lequel on utilise pour la mise en oeuvre du procédé une règle de transformation projetant des points d'un composant modélisé à l'intérieur du premier modèle CAD (4) de l'installation d'automatisation sur des points du même composant du deuxième modèle CAD (5), le procédé comprenant les étapes de procédé suivantes :

- application de la règle de transformation à au moins un premier point (P1) d'une première géométrie enveloppe (1) d'un premier objet CAD (12), représentant un premier composant d'automatisation, du premier modèle CAD (4) pour calculer un deuxième point (P2) dans le deuxième modèle CAD (5), et à au moins un troisième point (P3) d'une deuxième géométrie enveloppe (2) d'un deuxième objet CAD (13), représentant un deuxième composant d'automatisation, du premier modèle CAD (4) pour calculer un quatrième point (P4) dans le deuxième modèle CAD (5),
- vérification de l'existence d'une relation de groupement laquelle est considérée comme remplie si le deuxième et le quatrième point (P2, P4) sont placés à l'intérieur d'une troisième géométrie enveloppe (3) d'un objet CAD de groupe (16) du deuxième modèle CAD (5), et, si cette relation de groupe existe,
- création d'un ordre hiérarchique (9) à l'intérieur du système d'ingénierie, dans lequel le premier et deuxième objet CAD (12, 13) sont hiérarchiquement subordonnés à l'objet CAD de groupe (16).

2. Procédé selon la revendication 1, dans lequel, à l'intérieur d'une interface utilisateur graphique du système d'ingénierie, et si la relation de groupement existe, l'ordre hiérarchique entre l'objet CAD de groupe (16) et le premier et deuxième objet CAD (12, 13) est visualisé par un identificateur de ressources (6) et des premier et deuxième identificateurs de sous-ressources (7, 8) représentés notamment par un renfoncement, l'objet CAD de groupe pouvant être adressé par un utilisateur via l'interface utilisateur à travers l'identificateur de ressources (6) et le premier et deuxième objet CAD (12, 13) à travers les identificateurs de sous-ressources (7, 8).

3. Procédé selon la revendication 2, dans lequel l'identificateur de ressources (6) est automatiquement recréé et affecté à l'objet CAD de groupe (16) si la relation de groupement existe et qu'un identificateur de ressources pour l'objet CAD de groupe (16) n'est pas encore crée à l'intérieur du système d'ingénierie.

4. Procédé selon l'une des revendications 2 à 3, dans lequel les identificateurs de sous-ressources (7, 8) sont automatiquement recréés et affectés au premier et deuxième objet CAD (12, 13) si la relation de groupement existe et que des identificateurs de sous-ressources pour le premier et deuxième objet CAD (12, 13) ne sont pas encore crées à l'intérieur du système d'ingénierie.

5. Procédé selon l'une des revendications précédentes,
le premier point (P1) étant le centre de la première géométrie enveloppe (1) et le troisième point (P3) le centre de la deuxième géométrie enveloppe (2).

6. Procédé selon l'une des revendications précédentes,
le premier modèle CAD (4) étant présent dans un premier système CAD et le deuxième modèle CAD (5) dans un deuxième système CAD.

7. Système d'ingénierie pour l'affectation hiérarchique automatisée assistée par ordinateur d'objets CAD (12, 13, 14, 15) d'un premier modèle CAD (4) d'une installation d'automatisation à des objets CAD de groupe (16) d'un deuxième modèle CAD (5) de l'installation d'automatisation, le système d'ingénierie étant configuré pour la gestion de données structurée hiérarchiquement des objets CAD (12, 13, 14, 15) et objets CAD de groupe (16), et le système d'ingénierie étant configuré pour l'application d'une règle de transformation projetant des points d'un composant modélisé à l'intérieur du premier modèle CAD (4) de l'installation d'automatisation sur des points du même composant du deuxième modèle CAD (5), le système d'ingénierie comprenant :

- des moyen d'application de la règle de transformation à au moins un premier point (P1) d'une première géométrie enveloppe (1) d'un premier objet CAD (12), représentant un premier composant d'automatisation, du premier modèle CAD (4) pour calculer un deuxième point (P2) dans le deuxième modèle CAD (5), et à au moins un troisième point (P3) d'une deuxième géométrie enveloppe (2) d'un deuxième objet CAD (13), représentant un deuxième composant d'automatisation, du premier modèle CAD (4) pour calculer un quatrième point (P4) dans le deuxième modèle CAD (5),
- des moyens de vérification de l'existence d'une relation de groupement laquelle est considérée comme remplie si le deuxième et le quatrième point (P2, P4) sont placés à l'intérieur d'une troisième géométrie enveloppe (3) d'un objet CAD de groupe (16) du deuxième modèle CAD (5), et
- des moyens de création d'un ordre hiérarchique (9) à l'intérieur du système d'ingénierie, dans lequel le premier et deuxième objet CAD (12, 13) sont hiérarchiquement subordonnés à l'objet CAD de groupe (16).

8. Système d'ingénierie selon la revendication 7,
le système d'ingénierie comprenant une interface utilisateur graphique, configurée, si la relation de groupement existe, pour visualiser l'ordre hiérarchique entre l'objet CAD de groupe (16) et le premier et deuxième objet CAD (12, 13) par un identificateur de ressources (6) et des premier et deuxième identificateurs de sous-ressources (7, 8) représentés notamment par un renfoncement, l'objet CAD de groupe (16) étant adressable par un utilisateur via l'interface utilisateur à travers l'identificateur de ressources (6) et le premier et deuxième objet CAD (12, 13) à travers les identificateurs de sous-ressources (7, 8).

9. Système d'ingénierie selon la revendication 8,
le système d'ingénierie étant configuré pour recréer automatiquement l'identificateur de ressources (6) et l'affecter à l'objet CAD de groupe (16) si la relation de groupement existe et qu'un identificateur de ressources pour l'objet CAD de groupe (16) n'est pas encore crée à l'intérieur du système d'ingénierie.

10. Système d'ingénierie selon l'une des revendications 8 ou 9,
le système d'ingénierie étant configuré pour recréer automatiquement le premier et deuxième identificateur de sous-ressources (7,8) et les affecter au premier et deuxième objet CAD (12, 13) si la relation de groupement existe et que des identificateurs de sous-ressources pour le premier et deuxième objet CAD (12, 13) ne sont pas encore crées à l'intérieur du système d'ingénierie.

11. Système d'ingénierie selon l'une des revendications 7 à 10, le premier point (P1) étant le centre de la première géométrie enveloppe (1) et le troisième point (P3) le centre de la deuxième géométrie enveloppe (2).

12. Système d'ingénierie selon l'une des revendications 7 à 11, le premier modèle CAD (4) étant présent dans un premier système CAD et le deuxième modèle CAD (5) dans un deuxième système CAD.

FIG 1

T (P1) = P2

T (P3) = P4

# FIG 2

Ressourcen

... 

...

Förderer_1 — 6

—Bandsensor — 7

—Getriebe — 8

—Motor — 10

—Band — 11

...

...

...

EP 2 266 066 B1

# FIG 3

Ressourcen
...
...
Förderer_1
—Antrieb_1 —22
—Antrieb_2 —23
—Antrieb_3 —21
—Antrieb_4 —24
...

25

30

40

31
32
33
34

41
42
43
44

EP 2 266 066 B1

FIG 4

FIG 5

EP 2 266 066 B1

**EP 2 266 066 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2008000784 W